# EUROPÄISCHE PATENTSCHRIFT

(11) **EP 0 673 552 B1**
(45) Veröffentlichungstag und Bekanntmachung des Hinweises auf die Patenterteilung: **02.05.1997**
(21) Anmeldenummer: 94900760.3
(22) Anmeldetag: 03.12.1993
(51) Int. Cl.: H01M 2/26

(54) **ELEKTROCHEMISCHE ALKALIMETALL-ZELLE UND VERFAHREN ZU IHRER HERSTELLUNG**
ELECTROCHEMICAL ALKALI-METAL CELL AND A METHOD OF MANUFACTURING THE CELL
PILE ELECTROCHIMIQUE EN METAL ALCALIN ET PROCEDE POUR SA FABRICATION

(30) Priorität: 08.12.1992 DE 4241276
(43) Veröffentlichungstag der Anmeldung: 27.09.1995
(60) Teilanmeldung: 96116898.6
(73) Patentinhaber: Hambitzer, Günther, D-76327 Pfinztal (DE); Heitbaum, Joachim, D-61352 Bad Homburg (DE)
(72) Erfinder: Hambitzer, Günther, D-76327 Pfinztal (DE); Heitbaum, Joachim, D-61352 Bad Homburg (DE)
(74) Vertreter: Pfeifer, Hans-Peter, Dr., Dr. H.-P. Pfeifer Dr. P. Jany, Patentanwälte
(86) Internationale Anmeldenummer: DE9301163
(87) Internationale Veröffentlichungsnummer: WO9414202

(56) Entgegenhaltungen:
- EP-A- 0 464 397
- PATENT ABSTRACTS OF JAPAN vol. 8, no. 29 (E-226)7. Februar 1984 & JP,A,58 189 959 (CITIZEN TOKEI K.K.) 5. November 1983
- PATENT ABSTRACTS OF JAPAN vol. 9, no. 332 (E-370)26. Dezember 1985 & JP,A,60 163 382 (NIHON DENCHI K.K.) 26. August 1985

## Beschreibung

Die Erfindung betrifft eine elektrochemische Alkalimetall-Zelle, insbesondere für wiederaufladbare Alkalimetall-Akkumulatoren. In Alkalimetall-Zellen bilden Alkalimetall-Ionen die den Strom transportierende Spezies, wobei beide Elektroden und der Elektrolyt als elektrochemisch aktive Substanz das Alkalimetall A enthalten.

Weiter richtet sich die Erfindung auf ein Verfahren zur Herstellung einer solchen elektrochemischen Zelle und auf ein Verfahren zur Herstellung einer Separatorschicht auf einer Elektrode für eine solche elektrochemische Zelle.

Elektroden für elektrochemische Zellen müssen hohe Anforderungen erfüllen. Insbesondere soll durch eine hohe Beweglichkeit der bei der Elektrodenreaktion gebildeten Spezies eine hohe Stromstärke ermöglicht werden. Ein besonderes Problem entsteht dadurch, daß die Einlagerung der gebildeten Spezies zu Volumenänderungen führt und daß der Elektrodenaufbau gewährleisten soll, daß trotz dieser Volumenänderungen eine hohe Lebensdauer, und eine hohe Zahl von Lade- und Entladezyklen erreicht werden kann. Dieses Problem besteht insbesondere bei der positiven Elektrode, wobei die Fähigkeit der Elektrode, möglichst viel Alkalimetall einzulagern und reversibel wieder abzugeben, entscheidend für die Kapazität einer Akkumulator-Zelle ist.

Ein Ansatz zur Lösung dieser Probleme, von dem auch die vorliegende Erfindung in ihrem Hauptaspekt ausgeht, ist in der EP-A-0017400 beschrieben. Dort wird als aktive Masse der positiven Elektrode eine Interkalationsverbindung der allgemeinen Formel AₓM_{y}O_{z} beschrieben. Sie wird in Verbindung mit einer negativen Elektrode verwendet, deren aktive Substanz das Alkalimetall A ist. Bevorzugt ist A Lithium und M Kobalt, Nickel oder Eisen. Soweit im folgenden auf diese Substanzen als Beispiele für A und M Bezug genommen wird, geschieht dies ohne Beschränkung der Allgemeinheit.

Die Funktion der positiven Elektrode basiert auf der Einlagerung des Lithium in das Wirtsgitter des Metalloxids. x ist demzufolge kleiner als 1, wobei der Wert x = 0 in der Praxis nicht erreicht wird. Wegen schwankender Anteile an Verunreinigungen haben auch x und y im Regelfall keine exakt ganzzahligen Werte. Soweit im folgenden aktive Massen formelmäßig bezeichnet werden, sind die darin angegebenen ganzzahligen Indizes unter diesem Vorbehalt zu verstehen.

In der Praxis muß die ionenleitende aktive Masse einer Elektrode mit einem Substrat elektrisch verbunden werden, welches als elektronisch leitendes Ableitelement dient. Das Substrat ist im Regelfall ein Blech oder Netz aus Metall. Es wird meist zugleich zur mechanischen Befestigung der aktiven Masse verwendet. Um diese Verbindung zu bewerkstelligen, wird vielfach die aktive Masse in gemahlener Form mit organischen Bindemitteln, insbesondere auf Basis von Fluorkohlenwasserstoffen (Teflon®, Tefzel®) vermischt und auf das Substrat aufgepreßt, wobei zur Verbesserung der elektrischen Leitungseigenschaften vielfach Kohlenstoff zugesetzt wird. Dieses Verfahren ist für verschiedene aktive Massen in der DE-A-31 22 080 und speziell für LiCoO₂ in der EP-A-0 357 952 beschrieben.

Der Erfindung liegt die Aufgabe zugrunde, elektrochemischen Alkalimetall-Zellen mit einer positiven Elektrode auf Basis eines komplexen Metalloxids der allgemeinen Formel AₓM_{y}O_{z} dahingehend zu verbessern, daß bei einfacher Herstellung eine hohe Langzeitstabilität der Elektroden und somit eine kostengünstige Herstellung und hohe Lebensdauer der Zellen erreicht wird.

Diese Aufgabe wird gelöst durch eine elektrochemische Alkalimetall-Zelle mit einer negativen Elektrode, die ein Alkalimetall A enthält, einem das Alkalimetall A enthaltenden Elektrolyt und einer positiven Elektrode, welche ein metallisches Substrat und eine mit dem Substrat verbundene aktive Masse aufweist, wobei die aktive Masse ein komplexes Metalloxid der allgemeinen Formel AₓM_{y}O_{z} enthält, in welcher A das Alkalimetall, M ein Übergangsmetall und O Sauerstoff bezeichnet, bei welcher die positive Elektrode eine Verbundelektrode ist, bei der die aktive Masse ohne organisches Bindemittel unmittelbar mit dem Substrat verbunden ist, wobei die aktive Masse und deren Verbindung zu dem Substrat gleichzeitig in einem Arbeitsgang durch Glühen eines das Übergangsmetall M enthaltenden Elektroden-Basiskörpers in Kontakt mit einer anorganischen Verbindung des Alkalimetalles unter Umsetzung einer Oberflächenschicht des Basiskörpers mit der Alkalimetallverbindung zu dem komplexen Metalloxid hergestellt ist.

Das Übergangsmetall M ist vorzugsweise ein Element der Ordnungszahlen 22 bis 28, besonders bevorzugt Kobalt.

Der Elektroden-Basiskörper, aus dem die Verbundelektrode durch Glühen in Kontakt mit einer anorganischen Verbindung des Alkalimetalles hergestellt wird, ist ein insgesamt festes, sich flächig erstreckendes (nicht pulverförmiges) Metallteil, dessen Form vor dem Glühen im wesentlichen der gewünschten Form der Elektrode entspricht. Allgemein hat der Elektroden-Basiskörper vorzugsweise eine große Flächenausdehnung und geringe Dicke, wie beispielsweise eine Folie, ein Blech oder ein Gitter.

Der Elektroden-Basiskörper kann das Übergangsmetall M in homogener Verteilung enthalten. Ein solcher homogener Elektroden-Basiskörper wird in Kontakt mit der Alkalimetall-Verbindung so lange geglüht, bis eine Oberflächenschicht des komplexen Metalloxids gebildet ist, deren Dicke ausreichend ist, um eine aktive Masse für die gewünschte elektrische Kapazität der Zelle zu bilden. Dabei entsteht eine Elektrode, bei der das Substrat das gleiche Übergangsmetall M wie das komplexe Metalloxid enthält.

Der Elektroden-Basiskörper kann auch aus zwei oder mehreren metallischen Schichten unterschiedlicher Zusammensetzung bestehen, welche durch metallische Bindung miteinander verbunden sind. Beispielsweise kann auf einem Blech, einer Folie oder einem Gitter aus Nickel metallisches Kobalt (zum Beispiel durch galvanisches Abscheiden) aufgebracht werden. In diesem Fall kann der Glühvorgang in Kontakt mit der anorganischen Alkalimetall-Verbindung so lange durchgeführt werden, bis das Übergangsmetall M der Beschichtung (im Beispielsfall also das Kobalt) vollständig in das komplexe Metalloxid umgewandelt ist. Dabei entsteht eine Elektrode, bei der das Metall des Substrats von dem in dem komplexen Metalloxid enthaltenen Übergangsmetall verschieden ist.

In jedem der beiden vorgenannten Fälle wird eine Oberflächenschicht des Elektroden-Basiskörpers in die aktive Masse umgesetzt, während der nicht umgesetzte Teil das Substrat der Verbundelektrode bildet.

Bei einer gegebenen Elektrodenfläche ist die Dicke der Schicht des komplexen Metalloxids entscheidend für deren Fähigkeit, Alkalimetall-Ionen in das Wirtsgitter der aktiven Masse aufzunehmen. Deswegen wird bei den meisten Anwendungsfällen eine relativ hohe Schichtstärke der aktiven Masse (mindestens etwa 10 µm, besonders bevorzugt in der Größenordnung von 100 µm) angestrebt.

Die Verbindung des Substrats und des komplexen Metalloxids in der Verbundelektrode ist bindemittelfrei in dem Sinn, daß sie ohne ein zusätzliches organisches Bindemittel bewirkt wird. Vorzugsweise enthält die gesamte Elektrode im Benutzungszustand keinerlei organisches Bindemittel.

Ein Verfahren, bei dem eine Elektrode aus Nickel in Kontakt mit einer Lithiumverbindung bei Temperaturen zwischen 500 und 1000° C geglüht wird, ist aus der deutschen Auslegeschrift 1 025 025 bekannt. Es geht dabei speziell um Sinterlektroden für Gaselemente, die eine feinporöse Struktur mit zwei unterschiedlichen Porositäten haben, wobei die Elektrodenseite, die dem Elektrolyt zugewandt ist, grobporiger als die Gasseite der Elektrode ist. Um solche Elektroden gegen Korrosion durch die in Gaselementen verwendeten alkalischen Elektrolyt-Flüssigkeiten zu schützen, wurden sie mit einem dünnen Nickeloxid-Überzug versehen. Damit war jedoch eine für die Funktion der Elemente störende Erhöhung des elektrischen Widerstandes verbunden. In der Auslegeschrift wird das Glühen mit der Lithiumverbindung vorgeschlagen, um dadurch die Leitfähigkeit der Elektrode zu erhöhen.

Im Gegensatz zu dieser Literaturstelle geht es bei der vorliegenden Erfindung nicht um die Aufbringung einer Schutzschicht, die möglichst dünn sein soll, um die Funktion des Elementes nicht zu gefährden, sondern um die Erzeugung einer aktiven Masse aus einem Interkalations-Metalloxid, die eine möglichst große Schichtdicke haben muß, um eine ausreichende Kapazität der Zelle zu gewährleisten. Die Einsatzbedingungen und die Beanspruchung der Elektrode sind bei der vorliegenden Erfindung grundlegend verschieden von dem Anwendungsfall der deutschen Auslegeschrift.

Bei dem erfindungsgemäßen Verfahren ist das Alkalimetall A Bestandteil einer Reaktionsmittelschicht, die in pulverförmiger oder flüssiger Form vor dem Glühen auf den Elektroden-Basiskörper (beispielsweise durch Sprühen, Tauchen oder Streichen) aufgetragen wird. Bevorzugt besteht die Reaktionsmittelschicht aus einer Suspension, welche die Alkalimetallverbindung in einer Konzentration enthält, die weit über ihrer Löslichkeit liegt, so daß in der Suspension feste Partikel der Alkalimetall-Verbindung enthalten sind. Im Rahmen der Erfindung wurde festgestellt, daß trotz der notwendigerweise unregelmäßigen Struktur einer solchen Suspension beim Glühen eine ausreichend gleichmäßige und homogene Schicht des komplexen Metalloxids resultiert, welche sich einerseits durch eine sehr gute Festigkeit und Verbindung mit dem Substrat auszeichnet und andererseits durch eine mikroporöse Struktur die Einlagerung der Lithiumionen in das Wirtsgitter des Metalloxids erleichtert und dadurch hohe Stromstärken ermöglicht.

Die erfindungsgemäßen elektrochemischen Zellen sind insbesondere für den Betrieb bei Raumtemperatur vorgesehen. Deswegen wären an sich die bisher wegen ihrer guten Bindeeigenschaften und ihrer Elastizität bevorzugten organischen Zusätze in der positiven Elektrode gut verwendbar. Überraschenderweise hat sich im Rahmen der vorliegenden Erfindung jedoch ergeben, daß eine Verbundelektrode ganz ohne organische Bindemittel und ohne Kohlenstoff eine gute Langzeitstabilität aufweist und hohe Zyklenzahlen ermöglicht. Daneben zeichnet sie sich durch eine ausgezeichnete Kompatibilität unter schwierigsten Bedingungen aus.

Die Ausgangsmaterialien und Verfahrensbedingungen zur Herstellung der positiven Elektrode kann der Fachmann auf Basis der hier gegebenen Hinweise wählen. Insbesondere ist dabei folgendes zu beachten.

Die Erfindung wurde bisher im wesentlichen mit Lithiumzellen erprobt, bei denen das Alkalimetall A in der komplexen Metallverbindung ebenfalls Lithium ist. Es ist jedoch davon auszugehen, daß das erfindungsgemäße Verfahren auch mit anderen Alkalimetallen, insbesondere Natrium und Kalium, erfolgreich verwendet werden kann.

Hinsichtlich des Übergangsmetalls M sind Kobalt, Nickel und Eisen sowie deren Legierungen von besonderem Interesse, wobei gemäß der praktischen Erprobung der Erfindung bisher die besten Ergebnisse mit Kobalt bzw. kobalthaltigen Legierungen erzielt wurden. Dabei ist die komplexe Metallverbindung Lithiumkobaltoxid.

Die anorganische Alkalimetallverbindung, die vor dem zur Bildung der aktiven Masse erforderlichen Glühvorgang als Reaktionsmittel auf den Elektroden-Basiskörper aufgetragen wird, enthält vorzugsweise Sauerstoff. Praktisch erprobt wurden insbesondere Lithiumcarbonat (Li₂CO₃), Lithiumoxid (Li₂O) und Lithiumhydroxid (LiOH), jedoch dürften auch andere sauerstoffhaltige Alkalimetallverbindungen geeignet sein, beispielsweise LiNo₃. Die Eignung einer Verbindung für diesen Zweck läßt sich durch einfache Versuche testen. Verunreinigungen des komplexen Metalloxids wirken sich durch geringfügige Abweichungen vom exakt stöchiometrischen Verhältnis aus. Die Einsatzstoffe und die Verfahrensparameter beim Glühen sollen so gewählt werden, daß ein komplexes Metalloxid verhältnismäßig hoher Reinheit entsteht. Im Fall von Lithiumkobaltoxid sollte der Wert von y zwischen 0,9 und 1,1 und der Wert von z zwischen 1,9 und 2,1 liegen. x bestimmt den Ladezustand der Zelle und hat im allgemeinen maximal den Wert 1.

Das Glühen erfolgt vorzugsweise bei relativ hohen Temperaturen in der Größenordnung von 800 bis 1100°C. Vorzugsweise erfolgt das Glühen in sauerstoffhaltiger Atmosphäre, zweckmäßig an Luft.

In der erfindungsgemäßen elektrochemischen Zelle wird vorzugsweise ein anorganischer Elektrolyt auf Basis einer Komplexlösung von Lithiumtetrachloroaluminat (LiAlCl₄) in Schwefeldioxid (SO₂) in Verbindung mit einer Lithiumelektrode eingesetzt, wobei in diesem Fall A Lithium ist. Hierzu wird auf die erwähnte EP-A-0357952 Bezug genommen. Wichtige Vorteile der Erfindung lassen sich wie folgt zusammenfassen:
- Die in Verbindung mit chloridhaltigen Elektrolyten an kohlenstoffhaltigen Elektroden festgestellte störende Chlorentwicklung wird fast vollständig vermieden, wie weiter unten noch näher erläutert wird.
- Die Herstellung ist verhältnismäßig einfach. Insbesondere wird das Krebsrisiko, welches mit der Verarbeitung sehr feingemahlener Pulver bei der konventionellen Elektrodenherstellung verbunden war, vermieden.
- Festigkeit und Leitfähigkeit sind besser, als bei den vorbekannten Elektroden, welche Teflon® und Graphit enthalten.
- Dadurch, daß kein Teflon® verwendet werden muß, ist die Möglichkeit zur Wiederverwendung (Recycling) besser.

Gemäß einem weiteren wesentlichen Aspekt der Erfindung richtet sich diese auf ein Verfahren zur Herstellung einer Separatorschicht auf Elektroden die nach den zuvor geschilderten Verfahren herstellt wurden. Es ist aber auch in anderen Fällen einsetzbar, soweit die Elektroden keine organischen Bindemittel oder anderen organischen Substanzen enthalten, die durch hohe Temperaturen beeinträchtigt werden.

Dieses Verfahren zeichnet sich dadurch aus, daß man auf die Elektrodenoberfläche eine keramische oder glasbildende Substanz aufbringt und die Elektrode mit der aufgetragenen Substanz derartig glüht, daß sich eine durchgängige feinporige Deckschicht auf der Elektrodenoberfläche bildet.

Bei Raumtemperatur betriebene Alkalimetall-Batterien besitzen üblicherweise Separatoren aus mikroporösen Kunststoffen, insbesondere Fluorkohlenwasserstoffpolymeren. Mit solchen Separatoren ergeben sich jedoch Stabilitätsprobleme, insbesondere hinsichtlich der chemischen Stabilität in Gegenwart von Lithium und Chlor. Es wurden zwar Versuche gemacht, solche Stabilitätsprobleme dadurch zu vermeiden, daß man zwischen die negative Lithiumelektrode und den Separator zusätzlich ein Glasfaservlies einbringt. Auch dadurch läßt sich jedoch keine befriedigende Betriebssicherheit erreichen.

Die Suche nach geeigneten Materialien und Konstruktionen für einen Separator ist mit erheblichen Problemen verbunden, weil an den Separator schwierige und teilweise kontroverse Anforderungen zu stellen sind.

Einerseits soll der Elektrolytwiderstand möglichst klein sein. Hieraus resultiert die Forderung nach einer möglichst großen Porosität des Separators. Andererseits führen jedoch große Poren beim Betrieb der elektrochemischen Zelle unter Stromfluß zu einer inhomogenen Konzentrationsverteilung der aktiven Spezies. Hierdurch wird die Abscheidung von Alkalimetall in Form von Dendriten beschleunigt. Insofern besteht der Wunsch nach einem kleinen Porendurchmesser, vorzugsweise kleiner als 1 µm.

An die chemische Stabilität werden hohe Anforderungen gestellt, weil in elektrochemischen Zellen vielfach stark reaktive Substanzen, wie beispielsweise Alkalimetalle, Halogene und deren Verbindungen verwendet werden müssen. Diese greifen teilweise sogar spezielle Polymermaterialien chemisch an, die an sich durch ihre chemische Resistenz bekannt sind. Schließlich sollte der Separator mechanisch so stabil sein, daß er auch unter Belastung nicht bricht und ein Durchwachsen von Alkalimetall-Dendriten verhindert.

Trotz dieser extremen Anforderungen sollte ein Separator dünn und leicht sein, um das Zellgewicht möglichst gering zu halten.

Als glasbildende oder keramische Substanzen eignen sich Gläser, Kieselsole oder feuerfeste Oxide, wie Aluminiumoxid (z.B. als Mullit oder in Form von Fasern) oder Zirkonoxid, und dergl. Solche Stoffe sind chemisch sehr beständig. Durch eine Reihe verschiedener Maßnahmen beim Aufbringen und Glühen läßt sich die erforderliche Porosität der keramischen oder glasbildenden Substanz erzeugen.

Technologisch verhältnismäßig einfach ist es, die keramische oder glasbildende Substanz als Fasern oder als Pulver entsprechender Körnung (mittlerer Korndurchmesser typischerweise in der Größenordnung von 1 µm) aufzubringen und zusammenzusintern, wobei Temperatur und Dauer während des Sintervorgangs so bemessen werden, daß die Schicht eine ausreichende Mikroporosität behält. Dieser Glühvorgang erfolgt vorzugsweise in einer kontrollierten sauerstoffreduzierten Atmosphäre, d.h. in einer Atmosphäre mit einer im Vergleich zu Luft reduzierten Sauerstoffkonzentration. Insbesondere kann er in einer Inertgas-Atmospähre vollkommen also unter praktisch vollständigem Ausschluß von Sauerstoff erfolgen.

Alternativ kann man lösliche glasbildende oder keramische Substanzen auch in gelöster Form auftragen, wobei eine homogene Schicht gebildet wird, die sich beim Glühen zu einer chemisch stabilen Form umsetzt. Um dieser Schicht eine ausreichende Mikroporosität zu verleihen, kann man einen Stoff zusetzen, der nach dem Glühen, z.B. durch Waschen mit Wasser herausgelöst wird. Alternativ können auch Zuschlagstoffe verwendet werden, die beim Glühen in gasförmiger Form entweichen und dadurch die erforderliche Porosität erzeugen.

Die Erfindung wird im folgenden anhand eines in den Figuren dargestellten Ausführungsbeispiels näher erläutert; es zeigen:
- Fig. 1: bis Fig. 3 den Herstellungsprozeß einer Verbundelektrode in drei verschiedenen Verfahrensstufen in perspektivischer Darstellung, teilweise im Schnitt;
- Fig. 4: eine elektrochemische Zelle in einer perspektivischen Darstellung, teilweise im Schnitt.

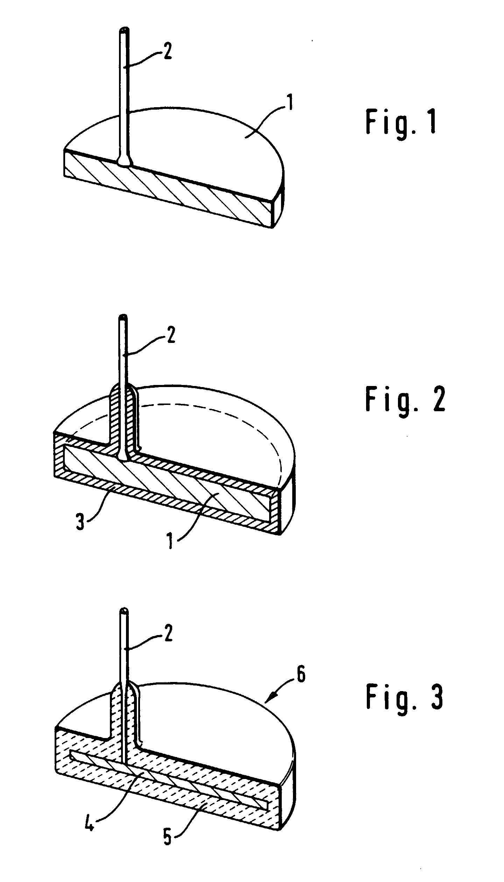

Fig. 1 zeigt einen zur Herstellung einer erfindungsgemäßen Verbundelektrode geeigneten Elektroden-Basiskörper 1, der aus dem Metall M besteht. Er hat im dargestellten Fall die Form einer kreisförmigen dünnen Platte. An dem Basiskörper 1 ist ein Metalldraht 2 durch Punktschweißen befestigt.

Auf den Elektroden-Basiskörper 1 wird eine Reaktionsmittelschicht 3 einer anorganischen Alkalimetallverbindung aufgetragen (Fig.2). Die Schicht 3 sollte den gesamten Basiskörper 1 und den Ansatz des Anschlußdrahtes 2 bedecken.

Der mit der Reaktionsmittelschicht 3 beschichtete Elektroden-Basiskörper 1 wird an Luft geglüht, wobei er zweckmäßigerweise an dem Draht 2 gehalten wird. Dabei reagiert die anorganische Alkalimetallverbindung A mit dem Metall M des Substrats unter Bildung des komplexen Metalloxids AₓM_{y}O_{z}. Das Ergebnis ist in Fig. 3 dargestellt. Es verbleibt ein Kern, der das (elektronisch leitende) Substrat 4 bildet und aus dem Metall M besteht. Er ist mit einer (ionisch leitenden) Schicht des komplexen Metalloxids (im Beispielsfall LiCoO₂) überzogen, die die aktive Masse 5 der Elektrode 6 bildet. Die relative Stärke des Substrats 4 einerseits und der Schicht 5 andererseits ist abhängig von der Temperatur und der Dauer des Glühvorgangs. Vorzugsweise sollte die Verbundelektrode 6 nahezu auf ihrer gesamten Fläche einen metallenen Kern aufweisen, weil hierdurch sowohl die mechanische Stabilität als auch die elektrischen Leitungseigenschaften verbessert werden. Die aktive Masse 5 ist kompakt und haftet gut auf dem elektronisch leitenden Untergrund.

Der metallische Elektroden-Basiskörper 1 kann selbstverständlich in verschiedenen äußeren Formen verarbeitet werden. Statt des dargestellten, aus einem Blech ausgestanzten plattenförmigen Basiskörpers kann - abhängig von der gewünschten Elektrodenform - auch ein Draht oder eine netzförmige Struktur verwendet werden. Vorzugsweise besteht der Elektroden-Basiskörper aus dem reinen Metall M oder aus einer Legierung von Übergangsmetallen (insbesondere Metallen mit den Ordnungszahlen 22 bis 28). Der Anteil sonstiger Beimischungen sollte gering (kleiner als 10 %) sein.

Auch für das Aufbringen der Reaktionsmittelschicht sind verschiedene Verfahren möglich. Die Konzentration der anorganische Alkalimetallverbindung sollte erheblich höher als die Löslichkeitsgrenze liegen. Sie kann beispielsweise in Form einer wässrigen Suspension oder einer Schmelze verwendet werden, die auf den Elektroden-Basiskörper (z.B. durch Sprühen) aufgetragen oder in die der Elektroden-Basiskörper eingetaucht wird.

Die anorganische Alkalimetallverbindung wird vorzugsweise in definierter Menge aufgebracht. Der Grad der Umsetzung läßt sich durch diese Menge sowie die Zeitdauer und die Temperatur des Glühens festlegen, wobei die Glühdauer in Abhängigkeit von der Dicke der Reaktionsmittelschicht in einem weiten Bereich zwischen etwa einer Minute und einer Stunde variieren kann. Die für eine ausreichende Schichtdicke der aktive Masse erforderliche Glühdauer hängt auch stark von dem Übergangsmetall M ab. Beispielsweise wird Kobalt erheblich schneller als Nickel umgesetzt.

Wenn zur Herstellung einer Elektrode mit verhältnismäßig großer Elektrodenmasse eine große Menge an Alkalimetall-verbindung aufgebracht werden muß, kann der Vorgang (Auftragen des Reaktionsmittels, Glühen) einmal oder mehrfach wiederholt werden. Im Falle eines homogenen Basiskörpers aus dem Übergangsmetall M bzw. einer das Übergangsmetall M enthaltenden Legierung wird der Prozeß abgebrochen, wenn der ursprüngliche Substratkörper weitgehend, aber noch nicht vollständig, umgesetzt ist. Bevorzugt wird der ursprüngliche Substratkörper zu maximal etwa 95% umgesetzt.

Dem Alkalimetall-haltigen Salz kann in geringer Konzentration von weniger als 5 % ein anderes Metallsalz, insbesondere ein Salz des Aluminium, Bor oder Zinn zugesetzt sein, um die Leitfähigkeit der beim Glühen gebildeten aktiven Masse zu erhöhen (US-Patent 4,668,595).

Wie erwähnt, kann der Elektroden-Basiskörper 1 auch mehrschichtig ausgebildet sein, wobei nur die oberste Schicht das Übergangsmetall M des komplexen Metalloxids enthält. In diesem Fall wird vorzugsweise die gesamte das Metall M enthaltende Schicht umgesetzt.

Ein nach dem Glühen verbleibender Überschuß der Alkalimetallverbindung wird durch Waschen (beispielsweise mit Wasser oder verdünnter Säure entfernt.

Gemäß einer besonders bevorzugten Ausführungsform des erfindungsgemäßen Verfahrens ist vorgesehen, die mechanische Stabilität der Elektrode dadurch zu erhöhen, daß im Anschluß an das Glühen in einem zusätzlichen Verfestigungsschritt eine festigkeitserhöhende anorganische Substanz aufgebracht und ein weiteres mal geglüht wird. Ebenso wie bei der weiter oben erwähnten Erzeugung einer Separatorschicht wird auch hier vorzugsweise in einer kontrollierten sauerstoffreduzierten Atmosphäre geglüht.

Als festigkeitserhöhende Substanz eignen sich insbesondere die oben zur Herstellung der Separatorschicht bereits erwähnten glasbildenden oder keramischen Substanzen, wie Kieselsole, Gläser und Aluminiumoxid sowie Mischungen daraus. Es kann zweckmäßig sein, zusätzlich eine anorganische Verbindung des Alkalimetalls zuzusetzen, wobei grundsätzliche die gleichen Verbindungen wie bei der Herstellung der komplexen Metallverbindung geeignet sind. Die Gemische können trocken oder als wässrige Lösung oder Suspension aufgebracht werden, wobei zur Erniederung der Oberflächenspannung ein Tensid zugesetzt werden sollte. Der Auftrag kann wiederum durch Bestreichen, Besprühen oder Tauchen erfolgen. Die Temperatur bei dem zweiten Glühvorgang ist vorzugsweise höher als beim ersten Glühvorgang (1100°C ist ein typischer Wert) während die Zeitdauer des zweiten Glühvorgangs vorzugsweise erheblich kürzer ist als die des ersten Glühvorgangs und typischerweise weniger als 10 Minuten beträgt.

Die Nachbehandlung der Verbundelektroden mit einer festigkeitserhöhenden Substanz verbessert nicht nur die mechanische Festigkeit, sondern führt in dem besonders bevorzugten Anwendungsfall in Verbindung mit einer chloridhaltigen Elektrolytlösung auch zu einer Verminderung der Chlorentwicklung.

Die Bildung von Chlor an der positiven Elektrode ist bei einer Zelle, deren Elektrolyt Chlorid enthält und die bei einer sehr hohen Zellspannung arbeitet, insbesondere dem in der EP-A-0 357 952 beschriebenen System Li|LiAlCl₄ * SO₂|LiCoO₂ eine Nebenreaktion, die einerseits positive und andererseits negative Effekte hat.

Einerseits bildet sie einen wirksamen Überladungsschutz. Das an der positiven Elektrode gebildete Chlorgas löst sich in dem Elektrolyt und wandert zu der negativen Lithiumelektrode, wo sich die Ausgangssubstanz Lithiumchlorid bildet. Dadurch wird oberhalb einer Grenzspannung der Ladestrom von einer Nebenreaktion verbraucht, die zu keinem Nettoeffekt führt.

Andererseits findet aufgrund der thermodynamischen Verhältnisse diese Reaktion auch im normalen Betriebsspannungsbereich des Elementes (bei dem genannten System im Spannungsbereich oberhalb von etwa 4,3 Volt) in praktisch nennenswertem Umfang statt. Sie bildet dadurch eine störende Selbstentladungsreaktion. Es ist deshalb wichtig, die Chlorentwicklung auf ein praktisch nicht mehr störendes Maß zu reduzieren. Dies gelingt durch den genannten Verfestigungsschritt.

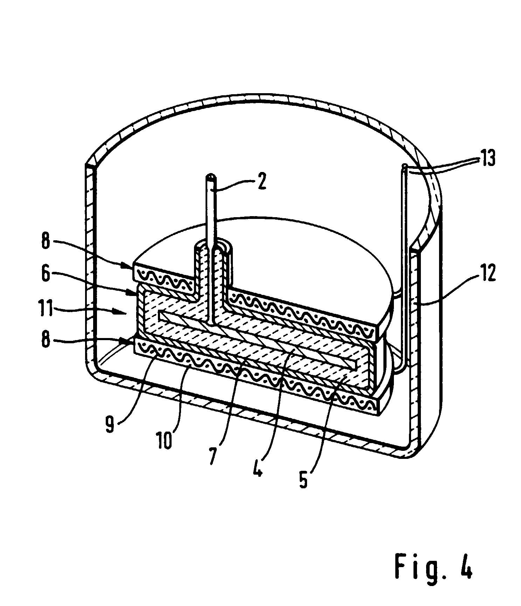

Fig. 4 zeigt den unteren Teil einer erfindungsgemäßen elektrochemischen Zelle. Die Verbundelektrode 6 ist mit einer Separatorschicht 7 überzogen, an welche sich auf beiden Seiten der (positiven) Verbundelektrode 6 eine negative Elektrode 8 anschließt, so daß ein insgesamt sandwichartiger Aufbau entsteht. Die negativen Elektroden 8 bestehen jeweils aus einem Traggitter 9 und dem darauf aufgepreßten Alkalimetall 10.

Die insgesamt mit 11 bezeichnete Elektroden-Sandwichkonstruktion befindet sich in einem Behälter 12 aus Glas oder einem geeigneten inerten Metall, von dem in der Figur nur der untere Teil dargestellt ist. Ebenfalls nur andeutungsweise dargestellt ist der elektrische Anschluß, der über den Draht 2 bzw. an der negativen Elektrode angeschlossene Drähte 13 erfolgt.

Die Erfindung wird im folgenden anhand von Beispielen noch näher erläutert.

### Beispiel 1:

Eine Verbundelektrode wurde in der auf Basis der Figuren 1-3 erläuterten Art und Weise hergestellt. Als Elektroden-Basiskörper diente ein Kobaltblech von 0,1 mm Stärke und 10 mm Durchmesser. Es wurde mit einer Reaktionsmittelschicht in Form einer Suspension von Lithiumcarbonat (80 Gew. % in Wasser) mit einer Menge von 20 mg Lithiumcarbonat pro cm² beschichtet. Anschließend wurde an Luft bei 900°C ca. eine Stunde geglüht.

Die resultierende Kobalt-Lithiumkobaltoxid-Verbundelektrode wurde mit verdünnten Säuren gewaschen und in eine Versuchszelle, deren Aufbau im wesentlichen Fig. 4 entsprach, eingebaut. Die aktive Masse der negativen Elektrode war Lithium. Als Elektrolytlösung wurde LiAlCl₄ * SO₂ mit einem Äquivalenzverhältnis von 1:3 eingesetzt.

Die so hergestellte Elektrode zeigte beim Laden bis 4,5 V (entsprechend einem Ladezustand von ca. 85%) und Entladen bis 3,5 V eine Kapazität von 13 mAh je cm² Elektrodenfläche.

### Beispiel 2:

Um die Festigkeit der Elektrode und ihre Beständigkeit gegen die beim Laden und Entladen auftretenden Volumenänderungen zu erhöhen und gleichzeitig die Chlorentwicklung, welche oberhalb von 4,3 V in verstärktem Maß beobachtet wurde, zu reduzieren, wurde die gemäß Beispiel 1 hergestellte Verbundelektrode mit einer wässrigen Paste eines hitzebeständigen Glaspulvers (DURAN®, Hersteller Fa. Schott aus Mainz, Bundesrepublik Deutschland) mit einem mittleren Partikeldurchmesser von 7µm und 1% Polyethylenglykol (als Tensid) bestrichen. Die Gewichtszunahme der getrockneten Elektrode betrug ca. 10 mg/cm². Danach wurde für 3 Minuten bei 1100°C geglüht und anschließend in kochendem Wasser gewaschen und getrocknet.

Auf diese Weise wurde auf der Elektrode eine Separatorschicht erzeugt, die sich durch hohe chemische Beständigkeit und mechanische Festigkeit auszeichnet. Ein Kurzschluß durch die bei hoher Zyklenzahl entstehenden Lithiumdendriten wird dadurch weitgehend verhindert.

Zugleich wird eine sehr hohe Leistungsdichte erreicht. Es wurde eine Strombedeckung (früher übliche Bezeichnung "Stromdichte") von 10 mA/cm² bei 3,1 V gemessen.

### Beispiel 3:

Die Experimente gemäß Beispiel 2 wurden wiederholt, wobei jedoch die Viskosität durch Erhöhung der Polyethylenglykol-Konzentration auf 5% und Zusatz von 10fach verdünnter Kieselsol, auf einen Wert eingestellt wurde, der das Aufbringen der Reaktionsmittelschicht durch Eintauchen ermöglicht. Die Ergebnisse waren ähnlich dem vorhergehenden Beispiel.

## Patentansprüche

1. Elektrochemische Alkalimetall-Zelle mit einer negativen Elektrode (8), die ein Alkalimetall A enthält, einem das Alkalimetall A enthaltenden Elektrolyt und einer positiven Elektrode (6), welche ein metallisches Substrat und eine mit dem Substrat verbundene aktive Masse aufweist, wobei die aktive Masse ein komplexes Metalloxid der allgemeinen Formel AₓM_{y}O_{z} enthält, in welcher A das Alkalimetall, M ein Übergangsmetall und O Sauerstoff bezeichnet,
**dadurch gekennzeichnet,** daß
die positive Elektrode eine Verbundelektrode (6) mit einer unmittelbaren Verbindung der aktiven Masse (3) mit dem Substrat (4) ohne organisches Bindemittel ist, wobei die aktive Masse (3) und die Verbindung mit dem Substrat durch Glühen eines das Übergangsmetall M enthaltenden Elektroden-Basiskörpers (1) in Kontakt mit einer anorganischen Verbindung (3) des Alkalimetalles unter Umsetzung einer Oberflächenschicht des Basiskörpers (1) mit der Alkalimetallverbindung zu dem komplexen Metalloxid hergestellt ist.

2. Alkalimetall-Zelle nach Anspruch 1, **dadurch gekennzeichnet**, daß das Substrat (4) das gleiche Übergangsmetall M wie das komplexe Metalloxid der aktiven Masse enthält.

3. Alkalimetall-Zelle nach einem der vorhergehenden Ansprüche, **dadurch gekennzeichnet**, daß das Übergangsmetall M ein Element der Ordnungszahlen 22 bis 28 ist.

4. Alkalimetall-Zelle nach Anspruch 3, **dadurch gekennzeichnet**, daß das Übergangsmetall M Kobalt ist.

5. Alkalimetall-Zelle nach einem der vorhergehenden Ansprüche, **dadurch gekennzeichnet**, daß das Alkalimetall A Lithium ist.

6. Verfahren zur Herstellung einer Alkalimetall-Zelle nach einem der vorhergehenden Ansprüche, **dadurch gekennzeichnet**, daß der Elektroden-Basiskörper (1) mit einer Reaktionsmittelschicht (3) beschichtet wird, welche die anorganische Verbindung des Alkalimetalles A enthält, der beschichtete Basiskörper geglüht wird und die dabei gebildete Verbundelektrode in die Alkalimetall-Zelle eingebaut wird.

7. Verfahren nach Anspruch 6, **dadurch gekennzeichnet**, daß das Glühen in Gegenwart von Sauerstoff erfolgt.

8. Verfahren nach einem der Ansprüche 6 oder 7, **dadurch gekennzeichnet**, daß die Alkalimetallverbindung der Reaktionsmittelschicht eine sauerstoffhaltige Verbindung, insbesondere ein Carbonat, ein Nitrat oder ein Hydroxid ist.

9. Verfahren nach einem der Ansprüche 6 bis 8, **dadurch gekennzeichnet**, daß die beim Glühen umgesetzte Oberflächenschicht des Elektroden-Basiskörpers zu mindestens 90 % aus dem Übergangsmetall M oder einer Legierung mehrerer Übergangsmetalle besteht.

10. Verfahren nach einem der Ansprüche 6 bis 9, **dadurch gekennzeichnet**, daß das Glühen bei einer Temperatur von mehr als 800°C erfolgt.

11. Verfahren nach einem der Ansprüche 6 bis 10, **dadurch gekennzeichnet**, daß man nach dem Glühen auf die Oberfläche eine festigkeitserhöhende anorganische Substanz aufbringt und ein weiteres Mal glüht.

12. Verfahren nach Anspruch 11, **dadurch gekennzeichnet,** daß das weitere Glühen nach Aufbringen der festigkeitserhöhenden anorganischen Substanz in einer Atmosphäre mit im Vergleich zu Luft reduziertem Sauerstoffgehalt erfolgt.

13. Verfahren nach einem der Ansprüche 11 oder 12, **dadurch gekennzeichnet**, daß das weitere Glühen nach dem Aufbringen der festigkeitserhöhenden anorganischen Substanz bei einer im Vergleich zu dem vorausgehenden Glühen zur Bildung des komplexen Metalloxids erhöhten Temperatur erfolgt.

14. Verfahren nach einem der Ansprüche 6 bis 13, **dadurch gekennzeichnet**, daß man zur Herstellung einer Separatorschicht auf einer Elektrode auf die Elektrodenoberfläche eine keramische oder glasbildende Substanz derartig aufbringt und glüht, daß sich eine durchgängige feinporöse Deckschicht auf der Elektrodenoberfläche bildet.

## Claims

1. Electrochemical alkali metal cell with a negative electrode (8) containing an alkali metal A, an electrolyte containing the alkali metal A and a positive electrode (6), which has a metallic substrate and an active mass connected to the substrate, the active mass containing a complex metal oxide with the general formula AₓM_{y}O_{z}, in which A denotes the alkali metal, M a transition metal and O oxygen,
**characterised in that**
the positive electrode is a composite electrode (6) with direct connection of the active mass (3) to the substrate (4) without an organic binder, the active mass (3) and connection to the substrate being produced by heating an electrode base (1) containing the transition metal M in contact with an inorganic compound (3) of the alkali metal whereby a surface layer of the base (1) is converted with the alkali metal compound to the complex metal oxide.

2. Alkali metal cell according to claim 1, **characterised in that** the substrate (4) contains the same transition metal M as the complex metal oxide of the active mass.

3. Alkali metal cell according to one of the above claims, **characterised in that** the transition metal M is an element with an atomic number between 22 and 28.

4. Alkali metal cell according to claim 3, **characterised in that** the transition metal M is cobalt.

5. Alkali metal cell according to one of the above claims, **characterised in that** the alkali metal A is lithium.

6. Process for manufacture of an alkali metal cell according to one of the above claims, **characterised in that** the electrode base (1) is coated with a reagent layer (3) which contains the inorganic compound of the alkali metal A, the coated base is heated and the composite electrode thus formed is incorporated in the alkali metal cell.

7. Process according to claim 6, **characterised in that** the heating takes place in the presence of oxygen.

8. Process according to one of claims 6 or 7, **characterised in that** the alkali metal compound of the reagent layer is a compound containing oxygen, in particular a carbonate, a nitrate or a hydroxide.

9. Process according to one of claims 6 to 8, **characterised in that** the surface layer of the electrode base converted during heating contains at least 90% of the transition metal M or of an alloy of several transition metals.

10. Process according to one of claims 6 to 9, **characterised in that** the heating takes place at a temperature of more than 800°C.

11. Process according to one of claims 6 to 10, **characterised in that** a strength-increasing inorganic substance is applied to the surface after the heating and thereafter a second heating step is performed.

12. Process according to claim 11, **characterised in that** the second heating step after application of the strength-increasing inorganic substance takes place in an atmosphere with a reduced oxygen content compared to air.

13. Process according to one of claims 11 or 12, **characterised in that** the second heating step after application of the strength-increasing inorganic substance takes place at a higher temperature compared to the preceding heating for formation of the complex metal oxide.

14. Process according to one of claims 6 to 13, **characterised in that**, for manufacturing of a separator layer on an electrode, a ceramic or vitrifying substance is applied to the electrode surface and heated in such a way that a continuous finely porous top layer forms on the electrode surface.

## Revendications

1. Elément électrochimique à métal alcalin comportant une électrode négative (8) qui contient un métal alcalin A, un électrolyte contenant le métal alcalin A, et une électrode positive (6) qui présente un substrat métallique et une matière active liée au substrat, la matière active contenant un oxyde métallique complexe de formule générale AₓM_{y}O_{z}, dans laquelle A désigne le métal alcalin, M un métal de transition et 0 l'oxygène, caractérisé par le fait que l'électrode positive est une électrode composite (6) avec une liaison directe de la matière active (3) au substrat (4) sans liant organique, la matière active (3) et la liaison au substrat étant produites par chauffage au rouge d'un corps de base d'électrode (1), contenant le métal de transition M, en contact avec un composé inorganique (3) du métal alcalin avec transformation d'une couche superficielle du corps de base (1) avec le composé du métal alcalin en l'oxyde métallique complexe.

2. Elément à métal alcalin selon la revendication 1, caractérisé par le fait que le substrat (4) contient le même métal de transition M que l'oxyde métallique complexe de la matière active.

3. Elément à métal alcalin selon l'une des revendications précédentes, caractérisé par le fait que le métal de transition M est un élément de numéro atomique compris entre 22 et 28.

4. Elément à métal alcalin selon la revendication 3, caractérisé par le fait que le métal de transition M est le cobalt.

5. Elément à métal alcalin selon l'une des revendications précédentes, caractérisé par le fait que le métal alcalin A est le lithium.

6. Procédé de fabrication d'un élément à métal alcalin selon l'une des revendications précédentes, caractérisé par le fait qu'on revêt le corps de base d'électrode (1) d'une couche d'agent de réaction (3) qui contient le composé inorganique du métal alcalin A, porte au rouge le corps de base revêtu et monte l'électrode composite alors obtenue dans l'élément à métal alcalin.

7. Procédé selon la revendication 6, caractérisé par le fait qu'on effectue le chauffage au rouge en présence d'oxygène.

8. Procédé selon l'une des revendications 6 et 7, caractérisé par le fait que le composé de métal alcalin de la couche d'agent de réaction est un composé oxygéné, en particulier un carbonate, un nitrate ou un hydroxyde.

9. Procédé selon l'une des revendications 6 à 8, caractérisé par le fait que la couche superficielle du corps de base d'électrode transformée lors du chauffage au rouge est constituée à au moins 90 % du métal de transition M ou d'un alliage de plusieurs métaux de transition.

10. Procédé selon l'une des revendications 6 à 9, caractérisé par le fait qu'on effectue le chauffage au rouge à une température supérieure à 800 °C.

11. Procédé selon l'une des revendications 6 à 10, caractérisé par le fait qu'après le chauffage au rouge, on applique sur la surface une substance inorganique augmentant la résistance mécanique et porte une nouvelle fois au rouge.

12. Procédé selon la revendication 11, caractérisé par le fait qu'on effectue le nouveau chauffage au rouge après l'application de la substance inorganique augmentant la résistance mécanique dans une atmosphère ayant une teneur en oxygène réduite comparativement à l'air.

13. Procédé selon l'une des revendications Il et 12, caractérisé par le fait qu'on effectue le nouveau chauffage au rouge après l'application de la substance inorganique augmentant la résistance mécanique à une température plus élevée comparativement au chauffage au rouge précédent pour la formation de l'oxyde métallique complexe.

14. Procédé selon l'une des revendications 6 à 13, caractérisé par le fait que pour produire une couche séparatrice sur une électrode, on applique à la surface de cette électrode une substance céramique ou formatrice de verre et la porte au rouge de façon telle qu'une couche de couverture continue à pores fins se forme à la surface de l'électrode.
